(19) Europäisches Patentamt
European Patent Office
Office européen des brevets

(11) EP 4 636 024 A1

(12) EUROPEAN PATENT APPLICATION

(43) Date of publication:
**22.10.2025 Bulletin 2025/43**

(21) Application number: **24170886.6**

(22) Date of filing: **17.04.2024**

(51) International Patent Classification (IPC):
***C08L 23/12*** *(2006.01)* ***C08L 23/08*** *(2025.01)*
***F16L 9/12*** *(2006.01)*

(52) Cooperative Patent Classification (CPC):
(C-Sets available)
**C08L 23/12; F16L 9/12;** C08L 2203/18;
C08L 2205/03; C08L 2207/02 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Basell Poliolefine Italia S.r.l.
20121 Milano (IT)**

(72) Inventors:
- **BOCCHINO, Marco
44122 Ferrara (IT)**
- **CAVALIERI, Claudio
44122 Ferrara (IT)**
- **MOSCARDI, Gilberto
44122 Ferrara (IT)**
- **BOLOGNESI, Sandro
44122 Ferrara (IT)**

(74) Representative: **LyondellBasell
c/o Basell Poliolefine Italia
Intellectual Property
P.le Donegani 12
44122 Ferrara (IT)**

(54) **PROPYLENE-BASED COPOLYMER COMPOSITION FOR PIPES**

(57) A) from 85 wt% to 99.0 wt%;of a propylene homopolymer:
B) from 1.0 wt% to 15.0 wt%; of a propylene, ethylene copolymer composition comprising:
b1) from 24 wt% to 54 wt%; of a propylene homopolymer;
b2) from 46 wt% to 76 wt% of a propylene ethylene copolymer

EP 4 636 024 A1

(52) Cooperative Patent Classification (CPC): (Cont.)

C-Sets
**C08L 23/12, C08L 23/12, C08L 23/08**

## Description

FIELD OF THE INVENTION

The present disclosure relates to a composition comprising a propylene homopolymer and an heterophasic propylene ethylene copolymer particularly fit for the production of sewage pipes with relatively high impact at low temperature to ensure installation in low temperature condition.

BACKGROUND OF THE INVENTION

Propylene ethylene copolymer are already known in the art for the production of pipes.

For example, according to international patent application WO 97/33117, one can obtain pipes of the polypropylene plastic material having high creep resistance, high longterm-pressure resistance, improved stiffness and resistance to rapid crack propagation as well. According to the said document, the catastrophic failure of a pipe of polypropylene plastic is prevented when the pipe is made of several layers of different polypropylene plastic material, wherein at least one layer consists of a broad molecular weight distribution (MWD) polypropylene that provides the high creep resistance and at least one layer consists of an elastomer-modified polypropylene that improves the impact strength. The said broad MWD polypropylene is a mixture of a very high molecular weight propylene random copolymer with 1-10 wt% of ethylene or a higher-a-olefin repeating units and of a low molecular weight propylene polymer with low (up to 1 wt%) or zero comonomer.

It is important to have limited wall thickness of the pipe. This allows to obtain pipes containing less material, weight less and improve the efficiency of the pipe in terms of feed due to the higher internal diameter (mainly for smaller diameter pipes applications). However when the wall thickness become small the pipe could become brittle, thus it is necessary to use a material having high impact resistance, especially at low temperature. Furthermore the material to be used for pipe have to have an high flexural modulus in order to obtain rigid pipes. Usually in a polypropylene based composition when the impact performance-is improved the flexural modulus is lowered. The applicant found that small amount of heterophasic copolymers having certain features can be added to propylene ethylene copolymer in order to have a good impact/stiffness balance and an improved pressure resistance.

SUMMARY OF THE INVENTION

An object of the present disclosure is a polyolefin composition comprising:

A) from 85 wt% to 99.0 wt%;of a propylene homopolymer having:

(i) polydispersity index ranging from 5 to 10
(ii) solubles in xylene at 25°C ranging from 4.0 wt% to 1.0 wt%;
(iii) the melt flow rate (230°C/5 kg.. ISO 1133) ranging from 0.2 g/lOmin to 3.5 g/lOmin;

B) from 1.0 wt% to 15.0 wt%; of a propylene, ethylene copolymer composition having:

i) fraction soluble in xylene at 25°C ranging from 35 wt% to 61 wt%;
ii) the melt flow rate (230°C/2.16 kg.. ISO 1133) ranging from 0.1 g/lOmin to 2.0 g/lOmin
iii) intrinsic viscosity, measured in tetralin, of the fraction soluble in xylene at 25°C ranging from 2.2 dl/g to 5.7 dl/g;
iv) content of ethylene derived units ranging from 25.5 wt% to 46.3 wt%;

said propylene, ethylene copolymer composition component B comprising:

b1) from 24 wt% to 54 wt%; of a propylene homopolymer having a melt flow rate MFR1 (230°C/2.16 kg. ISO 1133) ranging from 2.0 g/lOmin to 19.0 g/10min;
b2) from 46 wt% to 76 wt% of a propylene ethylene copolymer having a content of ethylene derived units ranging from 40.7 wt% to 77.5 wt%;

wherein the polyolefin composition has an melt flow rate (230°C/5 kg ISO 1133) ranging from 0.4 g/10min to 4.0 g/10min; the sum of amounts of A+B being 100wt% and the sum of amounts of b1+b2 being 100 wt%.

DETAILED DESCRIPTION OF THE INVENTION

Thus an object of the present disclosure is a polyolefin composition comprising:

A) from 85.0 wt% to 99.0 wt%; preferably from 90 wt% to 98.5 wt% more preferably from 93 wt% to 98 wt% of a propylene homopolymer having:

(i) polydispersity index ranging from 5 to 10
(ii) solubles in xylene at 25°C ranging from 4.0 wt% to 1.0 wt%; preferably from 3.0 wt% to 2.0 wt%;
(iii) the melt flow rate (230°C/5 kg.. ISO 1133) ranging from 0.2 g/lOmin to 3.5 g/lOmin; preferably from 0.6 g/lOmin to 2.0 g/10min;

B) from 1.0 wt% to 15.0 wt%; preferably from 1.5 wt% to 10.0 wt% more preferably from 2.0 wt% to 7.0 wt% of a propylene, ethylene copolymer composition having:

i) fraction soluble in xylene at 25°C ranging from 35 wt% to 61 wt%; preferably from 38 wt% to 58 wt%; more preferably from 43 wt% to 54 wt%;
ii) the melt flow rate (230°C/2.16 kg.. ISO 1133) ranging from 0.1 g/lOmin to 1.0 g/lOmin; preferably from 0.2 g/lOmin to 1.6 g/lOmin; more preferably from 0.3 g/lOmin to 1.4 g/10min;
iii) intrinsic viscosity, measured in tetralin, of the fraction soluble in xylene at 25°C ranging from 2.2 dl/g to 5.7 dl/g; preferably from 2.4 dl/g to 5.2 dl/g; more preferably from 2.7 dl/g to 4.7 dl/g;
iv) content of ethylene derived units ranging from 25.5 wt% to 46.3 wt%; preferably ranging from27.4 wt% to 43.9 wt%; more preferably ranging from 30.3 wt% to 42.2 wt%;

said propylene, ethylene copolymer composition comprising:

b1) from 24 wt% to 54 wt%; preferably from 29 wt% to 49 wt%; more preferably from 32 wt% to 46 wt% of a propylene homopolymer having a melt flow rate MFR1 (230°C/2.16 kg. ISO 1133) ranging from 2.0 g/lOmin to 19.0; preferably from 4.0 g/lOmin to 17.0 g/lOmin; more preferably from 6.0 g/lOmin to 15.0 g/10min;
b2) from 46 wt% to 76 wt%; preferably from 51 wt% to 71 wt%; more preferably from 54 wt% to 68 wt% of a propylene ethylene copolymer having a content of ethylene derived units ranging from 40.7 wt% to 77.5 wt%; preferably ranging from 46.8 wt% to 71.3 wt%; more preferably ranging from 50.8 wt% to 67.3 wt%;

wherein the polyolefin composition has an melt flow rate (230°C/5 kg.. ISO 1133) ranging from 0.4 g/lOmin to 4.0 g/lOmin; preferably from 0.7 g/lOmin to 3.2 g/lOmin; more preferably from 1.0 g/10 min to 2.7 g/10 min;
the sum of amounts of A+B being 100 wt% and the sum of amounts of b1+b2 being 100 wt%.

The term copolymer means a polymer containing only two monomers; preferably propylene and ethylene.
The polyolefin composition of the present disclosure preferably show a Charpy Impact test measured according to ISO 179-1:2010 at 23°C ranging from 50,0 $KJ/m^2$ to 80,0 $KJ/m^2$; preferably ranging from 55,0 $KJ/m^2$ to 75,0 $KJ/m^2$, even more preferably ranging from 60,0 $KJ/m^2$ to 70,0 $KJ/m^2$. The tensile modulus of the polyolefin composition of the present disclosure, determined according to ISO 527-2, ranges from 1600 MPa to 2500 MPa; preferably from 1700 MPa to 2300 MPa; even more preferably from 1800 MPa to 2200 MPa. The flexural modulus of the polyolefin composition of the present disclosure, determined according to ISO 178:2019 , ranges from 1600 MPa to 2400 MPa; preferably from 1700 MPa to 2300 MPa; even more preferably from 1800 MPa to 2200 MPa.
Preferably component A) is endowed with one or more of features:

i) flexural modulus, determined according to the method ISO 178:2019, ranging from 1500 Mpa to 2300 MPa; preferably ranging from 1800 Mpa to 2200 MPa;
ii) Izod impact test at 0°C, measured according to ISO 180/A, with specimen injection moulded according to ISO 1873-2 ranging from 3.0 $kJ/m^2$ to 6.0 $kJ/m^2$; preferably ranging from 3.8 $kJ/m^2$ to 5.3 $kJ/m^2$;
iii) melting point, measured by DSC, ranging from 155°C to 170°C, preferably ranging from 160°C to 167°C.

With the polyolefin composition of the present disclosure it is possible to obtain pipes, in particular sewage pipes having high modulus, high impact resistance and improved pressure resistance.
Thus a further object of the present disclosure is a pipe comprising the composition of the present disclosure.
The term "pipe" as used herein also includes pipe fittings, valves and all parts which are commonly necessary for e.g. a hot water piping system. Also included within the definition are single and multilayer pipes, where for example one or

more of the layers is a metal layer and which may include an adhesive layer.

Such articles can be manufactured through a variety of industrial processes well known in the art, such as for instance moulding, extrusion, and the like.

The composition of the present disclosure may further comprises an inorganic filler agent in an amount ranging from 0.5 to 60 parts by weight with respect to 100 parts by weight of the said composition. Typical examples of such filler agents are calcium carbonate, barium sulphate, titanium dioxide and talc. Talc and calcium carbonate are preferred. A number of filler agents can also have a nucleating effect, such as talc that is also a nucleating agent. The amount of a nucleating agent is typically from 0.2 to 5 wt% with respect to the polymer amount.

The composition of the disclosure is also suitable for providing pipes with walls of any configuration other than those with smooth inner and outer surface. Examples are pipes with a sandwich-like pipe wall, pipes with a hollow wall construction with longitudinally extending cavities, pipes with a hollow wall construction with spiral cavities, pipes with a smooth inner surface and a compact or hollow, spirally shaped, or an annularly ribbed outer surface, independently of the configuration of the respective pipe ends.

Articles, pressure pipes and related fittings according to the present disclosure are produced in a manner known per se, e.g. by (co-)extrusion or moulding, for instance.

Extrusion of articles can be made with different type of extruders for polyolefin, e.g. single or twin screw extruders.

Additionally a further object of the present disclosure is a process wherein the polyolefin composition of the present disclosure is moulded into said articles.

When the pipes are multi-layer, at least one layer is made of the polyolefin composition described above. The further layer(s) is/are made of an amorphous or crystalline polymer (such as homopolymer and co- or terpolymer) of R-CH=CH2 olefins, where R is a hydrogen atom or a $C_1$-$C_6$ alkyl radical. Particularly preferred are the following polymers:

isotactic or mainly isotactic propylene homopolymers;

random co- and terpolymers of propylene with ethylene and/or C4-C8 $\alpha$-olefin, such as 1-butene, 1-hexene, 1-octene, 4-methyl-1-pentene, wherein the total comonomer content ranges from 0.05% to 20% by weight, or mixture of said polymers with isotactic or mainly isotactic propylene homopolymers;

heterophasic polymer blends comprising (a) a propylene homopolymer and/or one of the co- and terpolymers of item (2), and an elastomeric moiety (b) comprising co- and terpolymers of ethylene with propylene and/or a C4-C8 $\alpha$-olefin, optionally containing minor amounts of a diene, the same disclosed for polymer (2)(a); and

amorphous polymers such as fluorinated polymers, polyvinyl difluoride (PVDF) for example.

In multi-layer pipes the layers of the pipe can have the same or different thickness.

The composition of the present disclosure can be prepared by blending the various components A), b1), and b2) or by preparing component A) and blend this component with component B) prepared in a single polymerization process by sequential polymerization steps.

The polymerization of A) and B) can be carried out in the presence of Ziegler-Natta catalysts. An essential component of said catalysts is a solid catalyst component comprising a titanium compound having at least one titanium-halogen bond, and an electron-donor compound, both supported on a magnesium halide in active form. Another essential component (co-catalyst) is an organoaluminium compound, such as an aluminium alkyl compound.

An external donor is optionally added.

The catalysts generally used in the process of the disclosure are capable of producing polypropylene with a value of xylene insolubility at ambient temperature greater than 90%, preferably greater than 95%.

Catalysts having the above mentioned characteristics are well known in the patent literature; particularly advantageous are the catalysts described in US patent 4,399,054 and European patent 45977. Other examples can be found in US patent 4,472,524.

The solid catalyst components used in said catalysts comprise, as electron-donors (internal donors), compounds selected from the group consisting of ethers, ketones, lactones, compounds containing N, P and/or S atoms, and esters of mono- and dicarboxylic acids.

Particularly suitable electron-donor compounds are esters of phtalic acid and 1,3-diethers of formula:

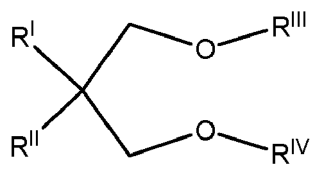

wherein RI and RII are the same or different and are C1-C18 alkyl, C3-C18 cycloalkyl or C7-C18 aryl radicals; RIII and RIV are the same or different and are C1-C4 alkyl radicals; or are the 1,3-diethers in which the carbon atom in position 2

belongs to a cyclic or polycyclic structure made up of 5, 6, or 7 carbon atoms, or of 5-n or 6-n' carbon atoms, and respectively n nitrogen atoms and n' heteroatoms selected from the group consisting of N, O, S and Si, where n is 1 or 2 and n' is 1, 2, or 3, said structure containing two or three unsaturations (cyclopolyenic structure), and optionally being condensed with other cyclic structures, or substituted with one or more substituents selected from the group consisting of linear or branched alkyl radicals; cycloalkyl, aryl, aralkyl, alkaryl radicals and halogens, or being condensed with other cyclic structures and substituted with one or more of the above mentioned substituents that can also be bonded to the condensed cyclic structures; one or more of the above mentioned alkyl, cycloalkyl, aryl, aralkyl, or alkaryl radicals and the condensed cyclic structures optionally containing one or more heteroatom(s) as substitutes for carbon or hydrogen atoms, or both.

Ethers of this type are described in published European patent applications 361493 and 728769.

Representative examples of said diethers are 2-methyl-2-isopropyl-1,3-dimethoxypropane, 2,2-diisobutyl-1,3-dimethoxypropane, 2-isopropyl-2-cyclopentyl-1,3-dimethoxypropane, 2-isopropyl-2-isoamyl-1,3-dimethoxypropane, 9,9-bis (methoxymethyl) fluorene.

Other suitable electron-donor compounds are phthalic acid esters, such as diisobutyl, dioctyl, diphenyl and benzylbutyl phthalate.

The preparation of the above mentioned catalyst component is carried out according to various methods.

For example, a MgCl2•nROH adduct (in particular in the form of spheroidal particles) wherein n is generally from 1 to 3 and ROH is ethanol, butanol or isobutanol, is reacted with an excess of TiCl4 containing the electron-donor compound. The reaction temperature is generally from 80 to 120° C. The solid is then isolated and reacted once more with TiCl4, in the presence or absence of the electron-donor compound, after which it is separated and washed with aliquots of a hydrocarbon until all chlorine ions have disappeared.

In the solid catalyst component the titanium compound, expressed as Ti, is generally present in an amount from 0.5 to 10% by weight. The quantity of electron-donor compound which remains fixed on the solid catalyst component generally is 5 to 20% by moles with respect to the magnesium dihalide.

The titanium compounds, which can be used for the preparation of the solid catalyst component, are the halides and the halogen alcoholates of titanium. Titanium tetrachloride is the preferred compound.

The reactions described above result in the formation of a magnesium halide in active form. Other reactions are known in the literature, which cause the formation of magnesium halide in active form starting from magnesium compounds other than halides, such as magnesium carboxylates.

The Al-alkyl compounds used as co-catalysts comprise the Al-trialkyls, such as Al-triethyl, Al-triisobutyl, Al-tri-n-butyl, and linear or cyclic Al-alkyl compounds containing two or more Al atoms bonded to each other by way of O or N atoms, or SO4 or SO3 groups.

The Al-alkyl compound is generally used in such a quantity that the Al/Ti ratio be from 1 to 1000.

The electron-donor compounds that can be used as external donors include aromatic acid esters such as alkyl benzoates, and in particular silicon compounds containing at least one Si-OR bond, where R is a hydrocarbon radical.

Examples of silicon compounds are (tert-butyl)2Si(OCH3)2, (cyclohexyl)(methyl)Si (OCH3)2, (cyclopentyl) 2Si(OCH3)2 and (phenyl)2Si(OCH3)2 and (1,1,2-trimethylpropyl)Si(OCH3)3.

1,3-diethers having the formulae described above can also be used advantageously. If the internal donor is one of these diethers, the external donors can be omitted.

In particular, even if many other combinations of the previously said catalyst components may allow to obtain compositions according to the present disclosure, the components A) and B) are preferably prepared by using catalysts containing a phthalate as internal donor and (cyclopentyl)2Si(OCH3)2 as external donor, or the said 1,3-diethers as internal donors.

A further The Ziegler-Natta catalysts that can be used to produce a propylene polymer of the present disclosure is a solid catalyst component comprising a magnesium halide, a titanium compound having at least a Ti-halogen bond as above described and at least two electron donor compounds selected from succinates and the other being selected from 1,3 diethers.

Component A) is preferably produced with a polymerization process illustrated in EP application 1 012 195.

In detail, the said process comprises feeding the monomers to said polymerisation zones in the presence of catalyst under reaction conditions and collecting the polymer product from the said polymerisation zones. In the said process the growing polymer particles flow upward through one (first) of the said polymerisation zones (riser) under fast fluidisation conditions, leave the said riser and enter another (second) polymerisation zone (downcomer) through which they flow downward in a densified form under the action of gravity, leave the said downcomer and are reintroduced into the riser, thus establishing a circulation of polymer between the riser and the downcomer.

In the downcomer high values of density of the solid are reached, which approach the bulk density of the polymer. A positive gain in pressure can thus be obtained along the direction of flow, so that it become to possible to reintroduce the polymer into the riser without the help of special mechanical means. In this way, a "loop" circulation is set up, which is defined by the balance of pressures between the two polymerisation zones and by the head loss introduced into the

system.

Generally, the condition of fast fluidization in the riser is established by feeding a gas mixture comprising the relevant monomers to the said riser. It is preferable that the feeding of the gas mixture is effected below the point of reintroduction of the polymer into the said riser by the use, where appropriate, of gas distributor means. The velocity of transport gas into the riser is higher than the transport velocity under the operating conditions, preferably from 2 to 15 m/s.

Generally, the polymer and the gaseous mixture leaving the riser are conveyed to a solid/gas separation zone. The solid/gas separation can be effected by using conventional separation means. From the separation zone, the polymer enters the downcomer. The gaseous mixture leaving the separation zone is compressed, cooled and transferred, if appropriate with the addition of make-up monomers and/or molecular weight regulators, to the riser. The transfer can be effected by means of a recycle line for the gaseous mixture.

The control of the polymer circulating between the two polymerisation zones can be effected by metering the amount of polymer leaving the downcomer using means suitable for controlling the flow of solids, such as mechanical valves.

The operating parameters, such as the temperature, are those that are usual in olefin polymerisation process, for example between 50 to 120° C.

This first stage process can be carried out under operating pressures of between 0.5 and 10 MPa, preferably between 1.5 to 6 MPa.

Advantageously, one or more inert gases are maintained in the polymerisation zones, in such quantities that the sum of the partial pressure of the inert gases is preferably between 5 and 80% of the total pressure of the gases. The inert gas can be nitrogen or propane, for example.

The various catalysts are fed up to the riser at any point of the said riser. However, they can also be fed at any point of the downcomer. The catalyst can be in any physical state, therefore catalysts in either solid or liquid state can be used.

The following examples are given to illustrate the present disclosure without limiting purpose.

EXAMPLES

**Characterization methods Xylene-soluble (XS) Fraction at 25 °C**

Xylene Solubles at 25°C have been determined according to ISO 16 152.

**DSC method for melting point**

Melting point has been measured according to ISO 11357-3, at scanning rate of 20C/min both in cooling and heating, on a sample of weight between 5 and 7 mg., under inert N2 flow. Instrument calibration made with indium

Melt Flow Rate: Determined according to the method ISO 1133 (230° C, 5 kg or 2.16 kg).

**Ethylene content in the copolymers**

$^{13}C$ NMR spectra were acquired on a Bruker AV-600 spectrometer equipped with cryoprobe, operating at 160.91 MHz in the Fourier transform mode at 120 °C.

The peak of the Sββ carbon (nomenclature according to "Monomer Sequence Distribution in Ethylene-Propylene Rubber Measured by 13C NMR. 3. Use of Reaction Probability Mode " C. J. Carman, R. A. Harrington and C. E. Wilkes, Macromolecules, 1977, 10, 536) was used as an internal reference at 29.9 ppm. The samples were dissolved in 1,1,2,2-tetrachloroethane-*d2* at 120 °C with a 8 % wt/v concentration. Each spectrum was acquired with a 90° pulse, and 15 seconds of delay between pulses and CPD to remove $^{1}H$-$^{13}C$ coupling. 512 transients were stored in 32K data points using a spectral window of 9000 Hz.

The assignments of the spectra, the evaluation of triad distribution and the composition were made according to Kakugo ("Carbon-13 NMR determination of monomer sequence distribution in ethylene-propylene copolymers prepared with δ-titanium trichloride- diethyl-aluminum chloride" M. Kakugo, Y. Naito, K. Mizunuma and T. Miyatake, Macromolecules, 1982, 15, 1150) using the following equations:

$$PPP = 100\ T\beta\beta/S \qquad PPE = 100\ T\beta\delta/S \qquad EPE = 100\ T\delta\delta/S$$

$$PEP = 100\ S\beta\beta/S \qquad PEE = 100\ S\beta\delta/S \qquad EEE = 100\ (0.25\ S\gamma\delta + 0.5\ S\delta\delta)/S$$

$$S = T\beta\beta + T\beta\delta + T\delta\delta + S\beta\beta + S\beta\delta + 0.25\ S\gamma\delta + 0.5\ S\delta\delta$$

The molar percentage of ethylene content was evaluated using the following equation:

$$E\% \text{ mol} = 100 * [PEP+PEE+EEE]$$

The weight percentage of ethylene content was evaluated using the following equation:

$$E\% \text{ wt.} = \frac{100 * E\% \text{ mol} * MWE}{E\% \text{ mol} * MWE + P\% \text{ mol} * MWP}$$

where P% mol is the molar percentage of propylene content, while MWE and MWP are the molecular weights of ethylene and propylene, respectively.

**Preparation of injection molded specimens:** test specimens 80 x 10 x 4 mm were obtained according to the method ISO 1873-2:2007.
**Flexural modulus:** Determined according to the method ISO 178:2019 on injection molded test specimens.
**Tensile Modulus:** Determined according to ISO 527-2, on injection molded test specimens.
**Charpy Impact test:** measured according to ISO 179-1:2010 on injection molded specimens.
**Izod impact test,** measured according to ISO 180/A, with specimen injection moulded according to ISO 1873-2.
**Polydispersity Index (PI):** Determined at a temperature of 200°C by using a parallel plates rheometer model RMS-800 marketed by RHEOMETRICS (USA), operating at an oscillation frequency which increases from 0.1 rad/sec to 100 rad/sec. From the crossover modulus one can derive the P.I. by way of the equation:

$$P.I. = 105/Gc$$

in which Gc is the crossover modulus which is defined as the value (expressed in Pa) at which G'=G" wherein G' is the storage modulus and G" is the loss modulus.

Component A)

Preparation of the solid catalyst component for component A)

Into a 2000 mL five-necked glass reactor, equipped with mechanical stirrer, jacket and a thermocouple, purged with nitrogen, 1000 mL of TiCl4 were introduced and the reactor cooled at -5°C. While stirring, 60.0 g of microspheroidal MgCl2·1.7C2H5OH having average particle size of 58μm (prepared in accordance with the method described in example 1 of EP728769) was added at -5°C. The temperature was raised at 40°C and an amount of diethyl 2,3-diisopropylsuccinate such as to have a Mg/succinate molar ratio of 13 was added. The temperature was raised to 100°C and kept at this value for 60 min. After that the stirring was stopped for 15 min and the solid settled down. The liquid was siphoned off. After siphoning, fresh TiCl4 and an amount of 9,9-bis(methoxymethyl)fluorene such to have a Mg/diether molar ratio of 26 was added. Then the temperature was raised to 110°C and kept for 30 minutes under stirring. The reactor was then cooled at 75°C and the stirrer was stopped for 15 min. After sedimentation and siphoning, fresh TiCl4 was added. Then the temperature was raised to 90°C and the suspension was stirred for 15min. The temperature was then decreased to 75°C and the stirrer was stopped, for 15 min. After sedimentation and siphoning at the solid was washed six times with anhydrous hexane (6x 1000 ml) at 60 °C and one time with hexane at 25°C. The solid was dried in a rotavapor.

Preparation of the catalyst system

Before introducing it into the polymerization reactors, the solid catalyst component described above was contacted with aluminum-triethyl (TEAL) and dicyclopentyl-dimethoxysilane (DCPMS) at a temperature of 15°C.

Prepolymerization

The catalyst system was then subject to prepolymerization treatment at 20°C by maintaining it in suspension in liquid propylene for a residence time of 9 minutes before introducing it into the polymerization reactor.
The polymerization runs were conducted in continuous in a polymerisation apparatus as described in EP 1 012 195.

The catalyst is sent to the polymerisation apparatus that comprises two interconnected cylindrical reactors, riser and downcomer. Fast fluidisation conditions are established in the riser by recycling gas from the gas-solid separator. Hydrogen was used as molecular weight regulator. The polymerization conditions are reported on table 1. Componetn A is the component A used in example 1 of WO2016/050461.

Table 1

| **Component A)** | | | |
|---|---|---|---|
| TEAL/external donor | | wt/wt | 6 |
| TEAL/catalyst | | wt/wt | 6 |
| Temperature | | °C | 73 |
| Pressure | | bar-g | 27 |
| Split holdup | riser | wt% | 40 |
| | downcomer | wt% | 60 |
| $C_3^-$ riser | | mole% | 80 |
| | | mole% | 1.3 |
| $H_2/C_3^-$ riser | | mol/mol | 0.028 |
| $H_2/C_3^-$ downcomer | | mol/mol | 0.016 |
| $C_3^-$ = propylene | | | |

The properties of component A has been reported on table 2

Table 2

| Component A | | |
|---|---|---|
| MFR 5 Kg/230°C | g/10min | 1.3 |
| Polydispersity (PI) | | 6.0 |
| Xylene solubles at 25°C. | % | <2 |
| Flexural modulus | MPa | 2050 |
| Tensile modulus | MPa | 1960 |
| IZOD 0°C | kJ/m2 | 4.3 |
| Stress at yield | % | 36 |
| Elongation at break | kJ/m2 | 28 |
| Tm | °C | 164 |

Components B)

Component B1) is a commercial heterophasic polymer obtained by sequential gas phase polymerization used in example 1 of WO2016/050461 as component B).

Component B2) is a commercial heterophasic polymer obtained by sequential gas phase polymerization. Sold by LyondellBasell under the tradenameCA12A the features of the polymer are reported on table 3

Table 3

| Component | | B1 | B2 |
|---|---|---|---|
| Component b1 | | | |
| Split | %wt | 30 | 39 |
| MFR 2.16 Kg/230°C | g/10min | 85.0 | 9.0 |

(continued)

| Component | | B1 | B2 |
|---|---|---|---|
| Xylene solubles at 25°C | %wt | 2.0 | 2.0 |
| Component b2 | | | |
| Split | %wt | 70 | 61 |
| C2 | %wt | 38.5 | 59 |
| Total polymer | | | |
| MFR 2.16 Kg/230°C | g/10min | - | 0.8 |
| intrinsic viscosity of the xylene soluble fraction at 25°C of the whole polymer | dl/g | 2.7 | 3.7 |
| Xylene solubles at 25°C | %wt | - | 48 |
| | | | |
| * C2= ethylene derived units | | | |

Components A and B have been blended. The properties of the resulting blends are reported on table 4 to be compared with the properties of comparative examples 2.

Table 4

| Blend | | 1 | Comp 2 | Comp 3 |
|---|---|---|---|---|
| Component | | B2 | B1 | - |
| Split* | wt% | 6 | 5.2 | 0 |
| MFR 5 kg 230°C | g/10min | 1.9 | 1.8 | 1.3 |
| Charpy at 23°C | kJ/m2 | 65.0 | 54 | 4.3 |
| Charpy at 0°C | kJ/m2 | 4.4 | 3.6 | 3.1 |
| | | | | |
| Flexural modulus | MPa | 2020 | 1930 | 2050 |
| Tensile modulus | % | 2070 | 2120 | - |
| *The remaining amount being component A. Comparative example 3 is component A alone | | | | |

From table 4 clearly result that the impact properties of the blend 1 is higher with respect to comparative blend 2 and component A alone, while flexural modulus and tensile modulus are substantially unchanged.

To the blends 1 and comparative 2 1.75 wt% of talc has been added. Hydraulic Pressure Resistance: According to ISO method 1 167-1 has been carried out at at 80°C and 4.20 MPa; and 95°C and 2.5 MPa. The results of the test are reported on table 5

Table 5

| Blend | | 1 | Comp 2 |
|---|---|---|---|
| Test 1<br>80°C 4.20 MPa | | | |
| Hours | h | 1397.4 | 1057.6 |
| Test 2<br>95°C 2.50 MPa | | 2142.3 | 1467.2 |

From table 5 it is clear that by using the composition of the present disclosure the pressure resistance is improved.

## Claims

1. A) from 85 wt% to 99.0 wt%;of a propylene homopolymer having:

   (i) polydispersity index ranging from 5 to 10
   (ii) solubles in xylene at 25°C ranging from 4.0 wt% to 1.0 wt%;
   (iii) the melt flow rate (230°C/5 kg.. ISO 1133) ranging from 0.2 g/lOmin to 3.5 g/lOmin;
   B) from 1.0 wt% to 15.0 wt%; of a propylene, ethylene copolymer composition having:

      i) fraction soluble in xylene at 25°C ranging from 35 wt% to 61 wt%;
      ii) the melt flow rate (230°C/2.16 kg.. ISO 1133) ranging from 0.1 g/10min to 2.0 g/10min
      iii) intrinsic viscosity, measured in tetralin, of the fraction soluble in xylene at 25°C ranging from 2.2 dl/g to 5.7 dl/g;
      iv) content of ethylene derived units ranging from 25.5 wt% to 46.3 wt%;

   said propylene, ethylene copolymer composition component B comprising:

      b1) from 24 wt% to 54 wt%; of a propylene homopolymer having a melt flow rate MFR1 (230°C/2.16 kg. ISO 1133) ranging from 2.0 g/lOmin to 19.0 g/lOmin;
      b2) from 46 wt% to 76 wt% of a propylene ethylene copolymer having a content of ethylene derived units ranging from 40.7 wt% to 77.5 wt%;
      wherein the polyolefin composition has an melt flow rate (230°C/5 kg ISO 1133) ranging from 0.4 g/lOmin to 4.0 g/lOmin; the sum of amounts of A+B being 100wt% and the sum of amounts of b1+b2 being 100 wt%.

2. The polyolefin composition according to claim 1 wherein component A) ranges from 90 wt% to 98.5 wt% and component B) ranges from 1.5 wt% to 10.0. wt%.

3. The polyolefin composition according to claims 1 or 2 wherein in component B) b1) ranges from 29 wt% to 49 wt%; and b2) ranges from 51 wt% to 71 wt %.

4. The polyolefin composition according to anyone of claims 1-3 having a melt flow rate (230°C/5 kg.. ISO 1133) ranging from 0.7 g/lOmin to 3.2 g/lOmin.

5. The polyolefin composition according to anyone of claims 1-4 wherein component B) has a content of ethylene derived units ranging from 27.4 wt% to 43.9 wt%.

6. The polyolefin composition according to anyone of claims 1-5 wherein in the component B) the intrinsic viscosity, measured in tetralin, of the fraction soluble in xylene at 25°C ranges from 2.4 dl/g to 5.2 dl/g.

7. The polyolefin composition according to anyone of claims 1-6 wherein in the component B) the fraction soluble in xylene at 25°C ranges from 38 wt% to 58 wt%.

8. The polyolefin composition according to anyone of claims 1-7 wherein in the component B) component b1) has the melt flow rate MFR1 (230°C/2.16 kg. ISO 1133) ranging from 4.0 g/lOmin to 17.0 g/lOmin.

9. The polyolefin composition according to anyone of claims 1-8 wherein in the component B) component b2) has a content of ethylene derived units ranging from 46.8 wt% to 71.3 wt%;

10. The polyolefin composition according to anyone of claims 1-9 wherein component B) has a content of ethylene derived units ranging from 33.4 wt% to 49.9 wt%.

11. The polyolefin composition according to anyone of claims 1-10 wherein in component A) the solubles in xylene at 25°C range from 3.0 wt% to 2.0 wt%.

12. The polyolefin composition according to anyone of claims 1-11 wherein component A) ranges from 93 wt% to 98 wt% and component B) ranges from 30.3 wt% to 42.2 wt%.

13. The polyolefin composition according to anyone of claims 1-12 wherein component B) has the fraction soluble in

xylene at 25°C ranging from 43 wt% to 54 wt%.

**14.** The polyolefin composition according to anyone of claims 1-13 wherein component B) has the intrinsic viscosity, measured in tetralin, of the fraction soluble in xylene at 25°C ranging from 2.7 dl/g to 4.7 dl/g;

**15.** A pipe comprising the polyolefin composition of claims 1-14

Europäisches Patentamt
European Patent Office
Office européen des brevets

# EUROPEAN SEARCH REPORT

Application Number
EP 24 17 0886

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | WO 2016/050461 A1 (BASELL POLIOLEFINE SRL [IT]) 7 April 2016 (2016-04-07)<br>* examples 1,2; tables 3,4 *<br>* claim 1 *<br>* paragraph [0001] *<br>----- | 1-15 | INV.<br>C08L23/12<br>C08L23/08<br>F16L9/12 |

TECHNICAL FIELDS SEARCHED (IPC)
C08L
F16L

The present search report has been drawn up for all claims

1

| Place of search | Date of completion of the search | Examiner |
|---|---|---|
| Munich | 10 September 2024 | van Bergen, Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 24 17 0886

This annex lists the patent family members relating to the patent documents cited in the above-mentioned European search report.
The members are as contained in the European Patent Office EDP file on
The European Patent Office is in no way liable for these particulars which are merely given for the purpose of information.

10-09-2024

| Patent document cited in search report | Publication date | Patent family member(s) | Publication date |
|---|---|---|---|
| WO 2016050461 A1 | 07-04-2016 | BR 112017006372 A2 | 19-12-2017 |
| | | CN 106795347 A | 31-05-2017 |
| | | EP 3201268 A1 | 09-08-2017 |
| | | ES 2707968 T3 | 08-04-2019 |
| | | JP 6293371 B2 | 14-03-2018 |
| | | JP 2017530234 A | 12-10-2017 |
| | | US 2018362745 A1 | 20-12-2018 |
| | | WO 2016050461 A1 | 07-04-2016 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 9733117 A
- US 4399054 A
- EP 45977 A
- US 4472524 A
- EP 361493 A
- EP 728769 A
- EP 1012195 A
- WO 2016050461 A


### Non-patent literature cited in the description


- **C. J. CARMAN** ; **R. A. HARRINGTON** ; **C. E. WILKES**. Monomer Sequence Distribution in Ethylene-Propylene Rubber Measured by C NMR. 3. Use of Reaction Probability Mode. *Macromolecules*, 1977, vol. 10, 536
- **M. KAKUGO** ; **Y. NAITO** ; **K. MIZUNUMA** ; **T. MIYATAKE**. Carbon-13 NMR determination of monomer sequence distribution in ethylene-propylene copolymers prepared with δ-titanium trichloride-diethyl-aluminum chloride. *Macromolecules*, 1982, vol. 15, 1150